# EUROPEAN PATENT SPECIFICATION

(11) **EP 3 291 720 B1**
(45) Date of publication and mention of the grant of the patent: **02.01.2019**
(21) Application number: 16720121.9
(22) Date of filing: 03.05.2016
(51) Int. Cl.: A47L 15/42

(54) **A DISHWASHER COMPRISING A HEAT PUMP**
GESCHIRRSPÜLER MIT EINER WÄRMEPUMPE
LAVE-VAISSELLE COMPRENANT UNE POMPE À CHALEUR

(30) Priority: 06.05.2015 TR 201505471
(43) Date of publication of application: 14.03.2018
(73) Proprietor: Arçelik Anonim Sirketi, 34950 Istanbul (TR)
(72) Inventor: POYRAZ, Onur, 34950 Istanbul (TR); DOKMECI, Saadettin, 34950 Istanbul (TR); ALPTEKIN, Ahmet, 34950 Istanbul (TR); SAHIN, Yavuz, 34950 Istanbul (TR)
(86) International application number: PCT/EP2016/059873
(87) International publication number: WO 2016/177718

(56) References cited:
- EP-A1- 2 679 135
- EP-A2- 1 864 603
- EP-A2- 2 682 036
- DE-A1-102010 002 661
- JP-A- 2007 125 198

## Description

The present invention relates to a dishwasher comprising a heat pump.

In heat pump dishwashers wherein closed cycle drying process is applied, the heat pump used for washing and drying the dishes is composed of heat exchangers named as evaporator and condenser. During the drying process and in cases wherein the condenser is operated to heat the wash water, hot and dry air is passed over the tub wherein the articles to be washed are placed. Humid air leaving the tub leaves its moisture while passing over the evaporator that works as the condenser and warms while passing over the condenser that works as the heater. The air that heats up with the removal of its moisture is sent into the tub throughout the drying cycle. The humid air condensing on the evaporator fins trickles down as water droplets due to the effect of the gravity and these droplets accumulate in the lower water collection chamber under the evaporator. However, the collected water, until it is discharged, humidifies the processing air and decreases the drying performance of the dishwasher and cause generation of undesired bad odors.

In the state of the art European Patent Application No. EP2682036, a dishwasher is disclosed, wherein the water condensed in the evaporator is directed into the washing tub in the washing step.

In another state of the art European Patent Application No. EP2682037, a dishwasher is disclosed, wherein the condensed water is discharged together with the wash water.

The aim of the present invention is the realization of a dishwasher with increased washing performance and decreased water consumption.

The dishwasher realized in order to attain the aim of the present invention, explicated in the first claim and the respective claims thereof, comprises a body; a heat pump that is disposed on the body and that has a first heat exchanger with heating function, a second heat exchanger transferring the heat received from the first heat exchanger to the wash water and a compressor connected to the first heat exchanger and the second heat exchanger and pressurizing the refrigerant fluid passing through the first heat exchanger and the second heat exchanger; a water collection tank that is disposed just under the first heat exchanger and that contacts the first heat exchanger, thus wherein the condensed water vapor is collected, and a water softening unit that enables the water received from the mains to be softened so as to be used in the washing step. During the water heating process, the ambient air is used as a heat source and the heat in the air is drawn by the heat pump. When the air used in the heating process hits the surface of the first heat exchanger, the water vapor in the air condenses and passes into the liquid phase with the effect of the temperature different between the air and the first heat exchanger and is collected in the water collection tank disposed under the first heat exchanger with the effect of gravity.

The dishwasher of the present invention comprises a sump that is connected to the water collection tank and the water softening unit; a pump that provides liquid transfer between the water collection tank and the water softening unit and the sump, and a control unit that realizes the process of transferring the water in the water collection tank into the sump and the water stored in the sump into the water softening unit in accordance with the predetermined algorithms. The control unit enables the water accumulated in the water collection tank after condensing on the first heat exchanger to be used in the water regeneration process. Thus, the water collected in the water collection tank is prevented from revaporizing and increasing the moisture in the body, and the amount of water taken from the mains for the regeneration process is decreased.

In an embodiment of the present invention, the sump is disposed above the water softening unit. Thus, the water accumulated in the sump is taken into the water softening unit with the effect of gravity without requiring operating the pump during the regeneration process with resin.

In an embodiment of the present invention, the dishwasher comprises a level sensor that measures the level of the water accumulated in the sump and in this embodiment, the control unit checks the signal received from the level sensor and operates the pump, thus providing the intake of the water from the sump into the water softening unit.

In an embodiment of the present invention, the control unit checks the water level received from the level sensor and enables the water to be delivered to the water softening unit to be taken from the mains when needed.

In an embodiment of the present invention, if the level of the water accumulated in the sump is below the water level predetermined by the producer, the control unit operates the heat pump independently from the washing and drying needs, enabling the amount of water accumulated in the sump to be increased. Thus, the amount of water sufficient for the regeneration process is enabled to be accumulated in the sump.

In an embodiment of the present invention, the dishwasher comprises a heater that is disposed in the vicinity of the sump. Thus, the heater enables the water stored in the sump to be heated and taken into the water softening unit, thus increasing the efficiency of the regeneration process.

The dishwasher realized in order to attain the aim of the present invention is illustrated in the attached figures, where:

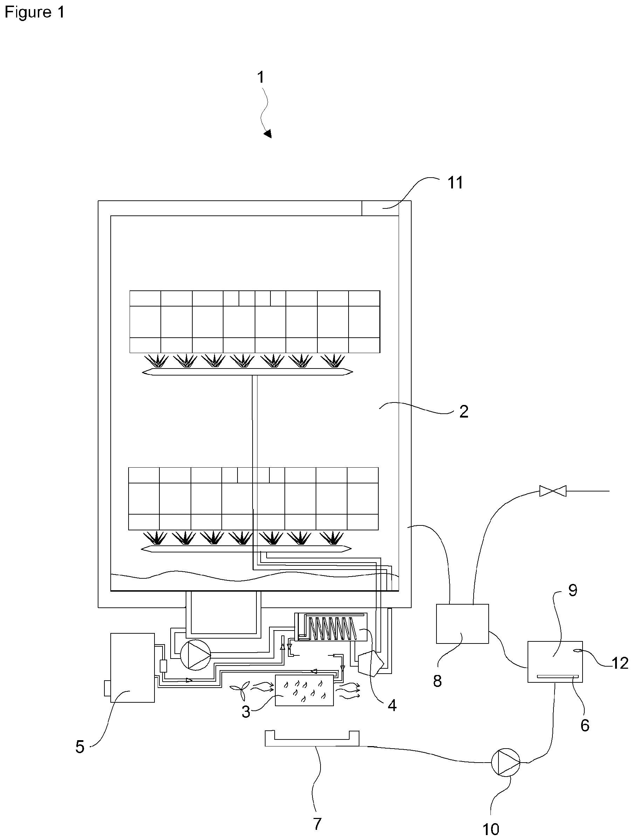

Figure 1 - is the schematic view of a dishwasher.

The elements illustrated in the figures are numbered as follows:
1. Dishwasher
2. Body
3. First heat exchanger
4. Second heat exchanger
5. Compressor
6. Heater
7. Water collection tank
8. Water softening unit
9. Sump
10. Pump
11. Control unit
12. Level sensor

The dishwasher (1) comprises a body (2); a heat pump that is disposed inside the body (2) and that has a first heat exchanger (3) providing the heating of the water to be used in the washing step, a second heat exchanger (4) transferring the heat received from the first heat exchanger (3) to the wash water and a compressor (5) fluidly connected to the first heat exchanger (3) and the second heat exchanger (4), realizing the refrigerant cycle; a water collection tank (7) that is disposed just under the first heat exchanger (3), wherein the water condensing on the first heat exchanger (3) is collected, and a water softening unit (8) that enables the water taken from the mains to be softened so as to be used in the washing step. For the regeneration of the resin that is disposed on the water softening unit (8) and that becomes saturated after more than one washing cycles, the water is transferred to the water softening unit (8) after the washing cycles predetermined by the producer.

The dishwasher (1) of the present invention comprises a sump (9) that is connected to the water collection tank (7) and the water softening unit (8); a pump (10) that is disposed between the water collection tank (7) and the water softening unit (8), and a control unit (10) that enables the water in the water collection tank (7) to be transferred to the sump (9) and/or the water stored in the sump (9) to the water softening unit (8) by means of the pump (10). The water condensed on the first heat exchanger (3) and accumulated in the water collection tank (7) is pumped into the sump (9) by means of the pump (10) and collected in the sump (9). The water stored in the sump (9) is controllably transferred to the water softening unit (8) after the washing cycles predetermined by the producer and used in the resin regeneration process. Thus, the water condensed on the first heat exchanger (3) is prevented from increasing the moisture in the dishwasher (1) while the water consumption of the dishwasher (1) is decreased.

In an embodiment of the present invention, the sump (9) is disposed in the vicinity of the water softening unit (8). Thus, the water stored in the sump (9) is transferred to the water softening unit (8) without increasing the energy consumption.

In an embodiment of the present invention, the dishwasher (1) comprises a level sensor (12) that measures the level of the water accumulated in the sump (9) and in this embodiment, if the value received from the level sensor (12) is above a water level value predetermined by the producer, the control unit (11) operates the pump (10), thus providing the intake of the water from the sump (9) into the water softening unit (8).

In an embodiment of the present invention, if the water level received from the level sensor (12) is below the water level value predetermined by the producer, the control unit (11) enables the water to be delivered to the water softening unit (8) to be taken from the mains. Thus, in case the water in the sump (9) is not sufficient, the regeneration process is enabled to be realized with the mains water.

In an embodiment of the present invention, if the water level received from the level sensor (12) is below the water level predetermined by the producer, the control unit (11) operates the heat pump independently from the washing and drying needs, enabling the amount of water accumulated in the sump (9) to be increased. Thus, the amount of water sufficient for the regeneration process is enabled to be accumulated in the sump.

In an embodiment of the present invention, the dishwasher (1) comprises a heater (6) around the sump (9) and the heater (6) enables the water stored in the sump (9) to be heated and to be taken into the water softening unit (8). Thus, the effectiveness of the regeneration process is increased.

By means of the present invention, in particular by using the water condensed on the first heat exchanger (3) and collected in the water collection tank (7) in the regeneration process, the condensed water is prevented from revaporizing and increasing the moisture in the body (2) and the amount of water taken from the mains for the regeneration process is decreased.

## Claims

1. A dishwasher (1) **comprising** a body (2); a heat pump that is disposed inside the body (2) and that has a first heat exchanger (3) providing the heating of the water to be used in the washing step, a second heat exchanger (4) transferring the heat received from the first heat exchanger (3) to the wash water and a compressor (5) fluidly connected to the first heat exchanger (3) and the second heat exchanger (4), realizing the refrigerant cycle; a water collection tank (7) that is disposed just under the first heat exchanger (3), wherein the water condensing on the first heat exchanger (3) is collected, and a water softening unit (8) that enables the water taken from the mains to be softened so as to be used in the washing step, **characterized by** a sump (9) that is connected to the water collection tank (7) and the water softening unit (8); a pump (10) that is disposed between the water collection tank (7) and the water softening unit (8), and a control unit (10) that enables the water in the water collection tank (7) to be transferred to the sump (9) and/or the water stored in the sump (9) to the water softening unit (8) by means of the pump (10).

2. A dishwasher (1) as in Claim 1, **characterized by** the sump (9) that is disposed in the vicinity of the water softening unit (8).

3. A dishwasher (1) as in Claim 1 or 2, **characterized by** a level sensor (12) that measures the level of the water accumulated in the sump (9) and the control unit (11) that operates the pump (10), thus providing the intake of the water from the sump (9) into the water softening unit (8) if the value received from the level sensor (12) is above a water level value predetermined by the producer.

4. A dishwasher (1) as in Claim 2, **characterized by** the control unit (11) that enables the water to be delivered to the water softening unit (8) to be taken from the mains if the water level received from the level sensor (12) is below the water level value predetermined by the producer.

5. A dishwasher (1) as in Claim 2, **characterized by** the control unit (11) that operates the heat pump independently from the washing and drying needs, enabling the amount of water accumulated in the sump (9) to be increased if the water level received from the level sensor (12) is below the water level predetermined by the producer.

6. A dishwasher (1) as in any one of the above claims, **characterized by** a heater (6) disposed around the sump (9) and that provides the heating of the water stored in the sump (9).

## Patentansprüche

1. Geschirrspülmaschine (1), **umfassend** einen Körper (2); eine Wärmepumpe, die innerhalb des Körpers (2) entsorgt ist und einen ersten Wärmetauscher (3) aufweist, der die Erwärmung des im Waschschritt zu verwendenden Wassers vorsiehteinen zweiten Wärmetauscher (4), der die vom ersten Wärmetauscher (3) aufgenommene Wärme auf das Waschwasser überträgt, und einen Kompressor (5), der mit dem ersten Wärmetauscher (3) fluidisch verbunden ist und den zweiten Wärmetauscher (4), um den Kältemittelkreislauf zu realisieren; einen Wassersammelbehälter (7), der unmittelbar unter dem ersten Wärmetauscher (3) entsorgt ist, wobei das am ersten Wärmetauscher (3) kondensierende Wasser gesammelt wird, und eine Wasserenthärtungseinheit (8), die es ermöglicht, das aus dem Netz entnommene Wasser zu enthärten, um es für den Waschschritt zu verwenden, **gekennzeichnet durch dass** einen Sumpf (9), der mit dem Wassersammelbehälter (7) und der Wasserenthärtungseinheit (8) verbunden ist; eine Pumpe (10), die zwischen dem Wassersammelbehälter (7) und der Wasserenthärtungseinheit (8) entsorgt ist, und eine Steuereinheit (10), die es ermöglicht, dass das Wasser im Wassersammelbehälter (7) mittels der Pumpe (10) in den Sumpf (9) und/oder das im Sumpf (9) gespeicherte Wasser in die Wasserenthärtungseinheit (8) übertragen wird.

2. Geschirrspülmaschine (1) nach Anspruch 1, **gekennzeichnet durch dass** den Sumpf (9), der in der Nähe der Wasserenthärtungseinheit (8) entsorgt ist.

3. Geschirrspülmaschine (1) nach Anspruch 1 oder 2, **gekennzeichnet durch dass** einen Niveausensor (12), der den Niveau des im Sumpf (9) angesammelten Wassers misst, und die Steuereinheit (11), die die Pumpe (10) betreibt, so dass der Eintritt des Wassers aus dem Sumpf (9) in die Wasserenthärtungseinheit (8) vorgesehen ist, wenn der vom Niveausensor (12) empfangene Wert über einem vom Hersteller vorgegebenen Wasserstandswert liegt.

4. Geschirrspülmaschine (1) nach Anspruch 2, **gekennzeichnet durch dass** die Steuereinheit (11), die es ermöglicht, dass das Wasser der Wasserenthärtungseinheit (8) aus dem Netz entnommen wird, wenn der vom Niveausensor (12) empfangene Wasserstand unter dem vom Hersteller vorgegebenen Wasserstandswert liegt.

5. Geschirrspülmaschine (1) nach Anspruch 2, **gekennzeichnet durch dass** die Steuereinheit (11), die die Wärmepumpe unabhängig von den Wasch und Trocknungsanforderungen betreibt, die es ermöglicht, die im Sumpf (9) angesammelte Wassermenge zu erhöhen, wenn der vom Niveausensor (12) empfangene Wasserstand unter dem vom Hersteller vorgegebenen Wasserstand liegt.

6. Geschirrspülmaschine (1) nach einem der vorstehenden Ansprüche, **gekennzeichnet durch dass** eine um den Sumpf (9) herum entsorgte Heizung (6), die die Erhitzung des in dem Sumpf (9) gespeicherten Wassers vorsieht.

## Revendications

1. Lave-vaisselle (1) **comprenant** un corps (2); une pompe à chaleur qui est disposée à l'intérieur du corps (2) et qui comporte un premier échangeur de chaleur (3) assurant le chauffage de l'eau à utiliser dans l'étape de lavage, un deuxième échangeur de chaleur (4) transférant la chaleur reçue du premier échangeur de chaleur (3) à l'eau de lavage et un compresseur (5) relié fluidiquement au premier échangeur de chaleur (3) et au deuxième échangeur de chaleur (4), réalisant le cycle du réfrigérant; un réservoir collecteur d'eau (7) qui est disposé juste sous le premier échangeur de chaleur (3), dans laquelle l'eau se condensant sur le premier échangeur de chaleur (3) est recueillie, et une unité d'adoucissement de l'eau (8) qui permet d'adoucir l'eau prélevée dans le réseau de distribution de manière à être utilisée dans l'étape de lavage, **caractérisé par** un puisard (9) qui est relié au réservoir collecteur d'eau (7) et à l'unité d'adoucissement d'eau (8); une pompe (10) qui est disposée entre le réservoir collecteur d'eau (7) et l'unité d'adoucissement d'eau (8), et une unité de commande (10) qui permet de transférer l'eau dans le réservoir collecteur d'eau (7) au puisard (9) et/ou l'eau stockée dans le puisard (9) vers l'unité d'adoucissement d'eau (8) par le biais de la pompe (10).

2. Lave-vaisselle (1) selon la revendication 1, **caractérisé par** le puisard (9) qui est disposé à proximité de l'unité d'adoucissement d'eau (8).

3. Lave-vaisselle (1) selon la revendication 1 ou 2, **caractérisé par** un capteur de niveau (12) qui mesure le niveau de l'eau accumulée dans le puisard (9) et l'unité de commande (11) qui commande la pompe (10), assurant ainsi l'eau du puisard (9) est aspirée dans l'unité d'adoucissement de l'eau (8) si la valeur reçue du capteur de niveau (12) est supérieure à une valeur de niveau d'eau prédéterminée par le producteur.

4. Lave-vaisselle (1) selon la revendication 2, **caractérisé par** l'unité de commande (11) qui permet de prélever de l'eau du réseau dans l'unité d'adoucissement (8) si le niveau d'eau reçu du capteur de niveau (12) est inférieur à la valeur prédéterminée par le producteur.

5. Lave-vaisselle (1) selon la revendication 2, **caractérisé par** l'unité de commande (11) qui fait fonctionner la pompe à chaleur indépendamment des besoins de lavage et de séchage, permettant d'augmenter la quantité d'eau accumulée dans le puisard (9) si le niveau d'eau reçu du capteur de niveau (12) est inférieur au niveau prédéterminé par le producteur.

6. Lave-vaisselle (1) selon l'une quelconque des revendications précédentes, **caractérisé par** un dispositif de chauffage (6) disposé autour du puisard (9) et qui fournit le chauffage de l'eau stockée dans le puisard (9).
